# EUROPÄISCHE PATENTSCHRIFT

(11) **EP 1 664 978 B1**
(45) Veröffentlichungstag und Bekanntmachung des Hinweises auf die Patenterteilung: **28.09.2016**
(21) Anmeldenummer: 04764474.5
(22) Anmeldetag: 25.08.2004
(51) Int. Cl.: G06F 21/54, G06F 21/62

(54) **VORRICHTUNG UND VERFAHREN ZUR SICHEREN AUSFÜHRUNG EINES PROGRAMMES**
DEVICE AND METHOD FOR THE RELIABLE EXECUTION OF A PROGRAM
DISPOSITIF ET PROCÉDÉ POUR ÉXECUTER UN PROGRAMME DE MANIÈRE FIABLE

(30) Priorität: 02.09.2003 DE 10340411
(43) Veröffentlichungstag der Anmeldung: 07.06.2006
(73) Patentinhaber: Infineon Technologies AG, 85579 Neubiberg (DE)
(72) Erfinder: AMSCHLER, Harald, 86399 Bobingen (DE); GAMMEL, Berndt, 85570 Markt-Schwaben (DE)
(74) Vertreter: Zimmermann, Tankred Klaus
(86) Internationale Anmeldenummer: PCT/EP2004/009498
(87) Internationale Veröffentlichungsnummer: WO 2005/024605

(56) Entgegenhaltungen:
- DE-A- 10 002 204
- DE-A- 10 131 577
- US-A- 6 006 328
- US-B1- 6 490 720

## Beschreibung

Die vorliegende Erfindung bezieht sich auf eine Vorrichtung zur sicheren Ausführung eines Programms und insbesondere auf eine Vorrichtung und ein Verfahren zum Ausführen eines Programms, das Überprüfungsbefehle aufweist, die eine Kontrolle der Programmausführung ermöglichen.

Chipkarten haben ein breites, sich ständig erweiterndes Einsatzspektrum. Sie enthalten häufig vertrauliche Informationen. Beispiele dafür sind Geld- und Kreditkarten, Versicherungskarten oder Zugangskontrollkarten. Der Einsatzbereich und die Akzeptanzen solcher Chipkarten hängt wesentlich von ihren Sicherheitsmerkmalen ab. Die auf den Chipkarten enthaltenen vertraulichen Daten müssen vor dem Auslesen durch Unbefugte geschützt werden.

Chipkarten weisen üblicherweise einen Chipkarten-Controller auf, auf dem ein Softwareprogramm ausgeführt wird. Bei einer Aktivierung führt das Programm üblicherweise Authentifizierungsprozesse durch, die die Chipkarte vor einem Zugriff durch Unbefugte schützen. Gelingt es einem Angreifer, den Authentifizierungsprozeß zu überspringen, so erhält er einen unautorisierten Zugriff auf die auf der Chipkarte gespeicherten Daten, sowie die von der Chipkarte gesteuerten Funktionen. Um den Authentifizierungsprozeß, oder einen anderen Prozeß, zu überspringen, wir der Ablauf der Programmausführung von einem Angreifer durch invasive Angriffe gestört. Ein möglicher invasiver Angriff ist die Beaufschlagung einer Spannungsversorgung einer Chipkarte mit einem Störimpuls. Dies hat zur Folge, daß ein Programm-Befehlszähler des ChipkartenControllers auf eine unspezifizierte, von einem Entwickler nicht vorgesehene Weise verändert wird. Eine durch einen Angreifer hervorgerufene Änderung des Befehlszählers bewirkt eine Veränderung des Programmablaufes, da der Chipkarten-Controller nach dem Angriff die Ausführung des Programms an einer Stelle fortsetzt, die durch den veränderten Befehlszähler vorgegeben wird. Auf diese Weise ist es möglich, gezielt einzelne Programmabschnitte, wie beispielsweise einen Authentifizierungsprozeß, zu überspringen und eine Nebeneintritt in einen Programmabschnitt zu schaffen, der ursprünglich durch den Authentifizierungsprozeß geschützt ist.

Herkömmlicherweise genutzte Programme sowie Chipkarten-Controller zur Ausführung solcher Programme, weisen bereits eine Reihe von Merkmalen auf, die Schutz vor einem Angriff bieten, der auf eine Störung des Programmablaufs abzielt.

Herkömmliche Programmabläufe enthalten gegenseitige Abhängigkeiten unterschiedlicher Programmabschnitte, die einen Scutz vor Veränderungen des Programmablaufs bieten. Beispielsweise werden Programminitialisierungen oder Programmergebnisse in späteren Programmabschnitten benötigt und ein nicht korrektes Vorhandensein solcher Werte würde zu einem Programmabsturz führen. Solche Abhängigkeiten haben jedoch den Nachteil, daß sie nicht gleichmäßig über einen Programmablauf verteilt sind. Um einen Programmablauf wirksam gegen Angriffe zu schützen sind somit zusätzliche künstliche Abhängigkeitskonstruktionen im Programmablauf erforderlich. Solche Abhängigkeiten als Schutz eines Programmablaufes werden jedoch von den üblichen Programmen zur Erstellung einer Software nicht unterstützt. Dies erschwert Programmänderungen, da die als Schutz notwendigen Abhängigkeiten zwischen einzelnen Programmteilen manuell eingefügt und überprüft werden müssen.

Häufig wird die Zeitdauer, die ein Programm zum Initialisieren benötigt, durch eine Überwachungsschaltung ("watch dog") überprüft und gesichert. Eine solche Lösung ist jedoch nicht flexibel genug, um sich an unterschiedliche Zeitdauern des Initialisierungsablaufes anzupassen und bietet keinen Schutz gegen Änderungen im Steuerungsablauf während der Einschaltprozedur. Lediglich die Ausführung des Endabschnittes der Initialisierung wird auf diese Weise geschützt. Ein weiterer Nachteil besteht darin, daß eine auf einer zeitlichen Überwachung basierende Überwachungslösung während des Fertigungstests eines Bausteines kaum überprüft werden kann. Ein weiterer Nachteil besteht darin, daß der Zeitgeber der Überwachungsschaltung nicht unbedingt widerstandsfähig genug ist, um nicht von dem Störimpuls mitbeeinflußt zu werden.

Eine weitere Möglichkeit zum Schutz vor Störimpulsen, die auf die Spannungsversorgung beaufschlagt werden, besteht darin, einen Störimpulssensor in eine Chipkarte zu integrieren. Der Störimpulssensor sollte Angriffe daran erkennen, daß sich eine Spannungsspitze außerhalb der spezifizierten Betriebsbedingungen befindet. Das größte Problem eines solchen Ansatzes besteht darin, daß der Sensor sehr genau auf die Grenzwerte der Betriebsbedingungen eingestellt werden muß. Dies bedeutet wiederum, daß die Betriebsbedingungen der zu schützenden Schaltung sehr präzise charakterisiert sein müssen um ein Sicherheitsloch zu vermeiden. Sowohl die Einstellung des Sensors als auch die genaue Charakterisierung der Schaltung ist sehr zeitaufwendig und kostenintensiv.

In der EP 1 305 708 B1 wird ein Verfahren vorgestellt, dass einen korrekten zeitlichen Ablauf von Codeblöcken eines Computerprogramms in einem Mehrprozessorsystem ermöglicht. Dabei weist das Mehrprozessorsystem einen Computer und eine manipulationssichere Vorrichtung auf, die mit dem Computer verbunden ist. Auf dem Computer wird das Computerprogramm ausgeführt. Die Codeblöcke werden jedoch als Unterprogramme in der manipulationssicheren Vorrichtung ausgeführt. Ein zeitlich korrekter Ablauf der Codeblöcke wird dadurch gewährleistet, daß die Codeblöcke Sequenzdaten aufweisen, die den jeweiligen Codeblock identifizieren sowie anzeigen, welche Codeblöcke vor bzw. nach dem Codeblock ausgeführt werden. Die manipulationssichere Vorrichtung ist ausgebildet, um ansprechend auf die Sequenzdaten zu bestimmen, ob ein Codeblock ausgeführt werden darf. Dieser Ansatz erfordert sowohl software- als auch hardwaremäßig einen hohen Aufwand, da die Sequenzdaten üblicherweise nicht automatisch erstellt und in die Codeblöcke integriert werden können und da ein zweiter Prozessor erforderlich ist, auf dem die gesicherten Codeblöcke ausgeführt werden.

US 2003/0131210 beschreibt eine Möglichkeit zur Überprüfung von Sicherungswerten eines EEPROM. Es wird angenommen, dass bei einer Veränderung von EEPROM-Inhalten aufgrund eines Angriffs auch die Inhalte der EEPROM-Sicherungen verändert werden. Während der Reset-Phase wird eine Boot-Sequenz ausgeführt, die die Sicherungen ausliest. Die Boot-Sequenz ist ein Programm, das es einem Computer oder Controller ermöglicht, eine automatische Überprüfung der Sicherungen durchzuführen. Die ausgelesenen Sicherungswerte können akkumuliert werden und mit einem Referenzwert, beispielsweise in Form eines Signaturregisters oder einem weiteren Sicherungswert verglichen werden.

US-5,018,146 beschreibt ein System zur Überprüfung einer Einsteckkarte eines Prozessorsystems. Die Einsteckkarte weist einen Speicher auf, in dem ein erstes Fehlerüberprüfungswort und Startparameter-Daten-Wörter angeordnet sind. Nach dem Einsteckvorgang werden das erste Fehlerüberprüfungswort sowie die Startparameter-Daten-Wörter ausgelesen. Aus den Startparameter-Daten-Wörter wird mit einem vorbestimmten Algorithmus ein weites Fehlerüberprüfungswort gebildet und mit dem ersten Fehlerüberprüfungswort verglichen. Stimmen das erste und das zweite Fehlerüberprüfungswort nicht miteinander überein, so wird der Karte ein weiterer Betrieb in dem System nicht erlaubt.

Bei Ramamoorthy, C.V. et al.: Reliability and integrity of large computer program, in: GFK-GI-GMR Fachtagung Prozessrechner 1974, Springer Verlag, Berlin/Heidelberg, S.147 - 151 ist eine Sicherheitsmaßnahme durch eine Programmiertechnik beschrieben, bei der Programmcodeblöcke durch Staffelüberprüfungspunkte getrennt sind, an denen jeweils ein Staffelcode mit einem voreingstellten Wert verglichen wird.

Bei Keim, G.: Die Erhöhung der Sicherheit von Mikrocomputersystemen, in: Angewandte Informatik 2/80, S. 45 - 50, ist ausgeführt, dass eine gegenseitige Überprüfung stattfinden kann, wenn in einem System Hardware und Software zur Erkennung von Fehlern verwendet wird.

In der EP 1 161 725 B1 ist ein Verfahren zum Überwachen des Programmflusses beschrieben, bei dem in einer Anwendung, die sich auf eine Smartcard bezieht, eine Hardwarekomponente zusätzlich zu einem Mikroprozessor, der ein Programm ausführt, vorgesehen sein kann.

Es ist die Aufgabe der vorliegenden Erfindung, eine Vorrichtung zur sicheren Ausführung eines Programms zu schaffen, die einen flexiblen, einfach und kostengünstig zu realisierenden sowie wirksamen Schutz der Ausführung des Programms ermöglichen.

Diese Aufgabe wird durch eine Vorrichtung zur sicheren Ausführung eines Programms gemäß Anspruch 1 gelöst.

Der Erfindung liegt die Erkenntnis zugrunde, daß sich ein Hinweis auf ein nicht sicheres Ausführen eines Programms liefern läßt, indem ein aufgrund der Ausführung des Programms erzeugter Überprüfungswert mit einem separat erzeugten Kontrollwert verglichen wird.

Entsprechend der vorliegenden Erfindung wird ein Programm, das eine Sequenz von Programm-Befehlen, bestehend aus Nutzbefehlen und Überprüfungsbefehlen aufweist, auf einer Einrichtung zum Ausführen der Programmbefehle ausgeführt. Die Einrichtung zum Ausführen der Programmbefehle ist ausgebildet, um beim Ausführen eines Überprüfungsbefehls gemäß einer Erstellungsvorschrift einen Überprüfungswert zu erzeugen. In einer Einrichtung zum Erzeugen eines Kontrollwertes wird gemäß der Erstellungsvorschrift ein Kontrollwert erzeugt und in einer Einrichtung zum Vergleichen mit dem Überprüfungswert verglichen. Bei einer Nichtübereinstimmung des Kontrollwertes mit dem Überprüfungswert wird von einer Einrichtung zum Liefern eines Hinweises ein Hinweis auf ein nicht sicheres Ausführen des Programms geliefert.

Der besondere Vorteil des erfindungsgemäßen Ansatzes liegt in seiner großen Flexibilität. Ein sicheres Ausführen eines Programms ist unabhängig von zeitlichen Gegebenheiten gewährleistet. Dies ist wichtig, da die in unterschiedlichen Produktableitungen genutzten Konfigurationen und Ausführungsformen erhebliche Abweichungen im zeitlichen Ablauf eines Programmflusses zur Folge haben. Ferner weisen Hardwareprozesse, die parallel zu auf einem Hauptrechner ablaufenden Prozessen ausgeführt werden, üblicherweise eine von dem Hauptrechner abweichende Taktung auf.

Ein weiterer Vorteil besteht darin, daß die Häufigkeit von Überprüfungsbefehlen in einem ausführbaren Programm frei gewählt werden kann und sich somit an kritische Programmabschnitte und an zukünftige Anforderungen flexibel anpassen läßt.

Ein weiterer Vorteil liegt in der kostengünstigen und einfachen Realisierung der vorliegenden Erfindung. Die in den Programmablauf eingefügten Überprüfungsbefehle verursachen praktisch keinerlei Kosten bezüglich der Programmgröße und der Leistungsfähigkeit der Software. Werden die Einrichtungen zum Erzeugen eines Kontrollwertes, die Einrichtung zum Vergleichen und die Einrichtung zum Liefern eines Hinweises in Hardware ausgeführt, so kann der dafür notwendige Flächenverbrauch auf einem Siliziumchip minimal gehalten werden. Eine weitere Kostenersparnis liegt darin, daß Zertifizierungsprozesse und Sicherheitsprüfungen vereinfacht werden, da die Ausführung eines spezifizierten Ausführungspfades eines Programms durch die Anordnung von Überprüfungsbefehlen erzwungen wird. Die Anordnung von Überprüfungsbefehlen wird dabei direkt aus Zustandsdiagrammen abgeleitet und kann auf einfache Weise gegenüber einer Dokumentation überprüft werden.

Ein besonderer Vorteil liegt in der hohen Sicherheit, den die Erfindung gegenüber invasiven Angriffen bietet. Sensible Programmabschnitte werden mit Überprüfungsbefehlen durchsetzt und sind dadurch vor einem durch einen invasiven Angriff hervorgerufenen Nebeneintritt gesichert. Unterschiedliche Ausführungspfade können angemessen gegenüber Nebeneintritten geschützt werden. Des weiteren werden unsichere Endlosschleifen ausgeschlossen, da bei einer Ausführung eines nächstfolgenden Überprüfungsbefehles, sofern notwendig, automatisch ein Alarm ausgelöst wird.

Ein weiterer Vorteil der vorliegenden Erfindung liegt darin, daß der erfindungsgemäße Ansatz systemunabhängig ist und sowohl Programme in einer Betriebssystemschicht als auch Anwendungssoftware schützt.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Darstellung einer Ausführung eines Programms gemäß der vorliegenden Erfindung;
- Fig. 2: eine Vorrichtung zur sicheren Ausführung eines Programms gemäß der vorliegenden Erfindung;
- Fig. 3: ein Blockschaltbild einer Vorrichtung zur sicheren Ausführung eines Programms gemäß einem bevorzugten Ausführungsbeispiel;
- Fig. 4: ein Blockschaltbild einer Vorrichtung zur sicheren Ausführung eines Programms gemäß eines weiteren bevorzugten Ausführungsbeispiels; und
- Fig. 5: ein Blockdiagramm einer Einrichtung zum Erzeugen eines Kontrollwertes und einer Einrichtung zum Vergleichen des Überprüfungswertes mit dem Kontrollwert gemäß einem bevorzugten Ausführungsbeispiel der vorliegenden Erfindung.

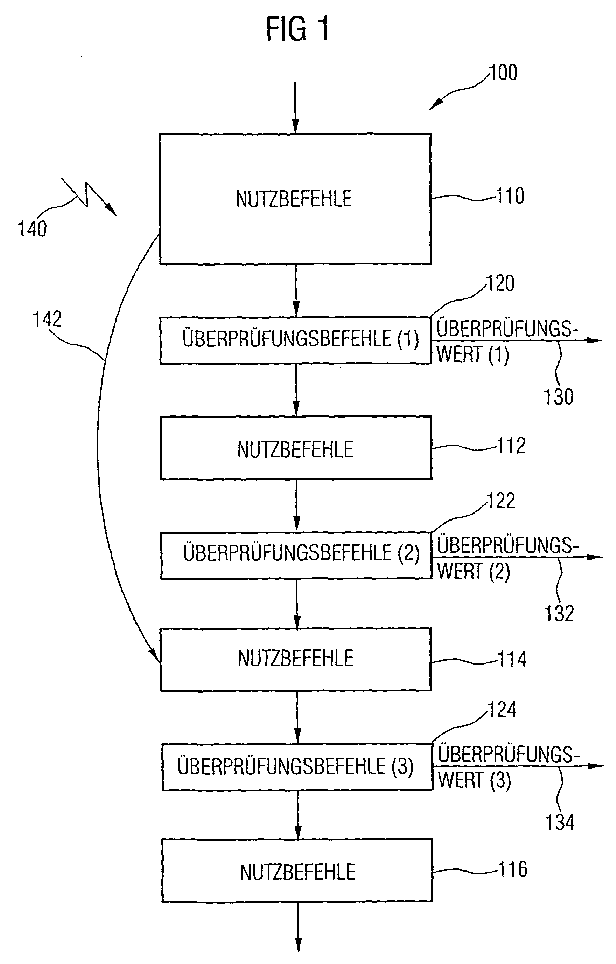

In Fig. 1 ist der zeitliche Ablauf einer Ausführung-eines Programms in einer Vorrichtung zur sicheren Ausführung eines Programms gezeigt. Ferner ist eine Störung der Programmausführung, hervorgerufen durch einen Angriff auf die Vorrichtung zur sicheren Ausführung eines Programm, dargestellt.

Das Programm weist eine Sequenz 100 von Programm-Befehlen auf, die zeitlich aufeinanderfolgend in einer Einrichtung zum Ausführen (nicht gezeigt) ausgeführt werden. Die Sequenz 100 von Programm-Befehlen umfaßt dabei Nutzbefehle 110, 112, 114, 116 sowie Überprüfungsbefehle 120, 122, 124. Die Nutzbefehle 110, 112, 114, 116 beinhalten jeweils eine einzige oder eine Mehrzahl anwendungsspezifischer Anweisungen. In dem vorliegenden Ausführungsbeispiel beinhalten die Nutzbefehle 110 Anweisungen für eine Systeminitialisierung sowie eine Anwenderauthentifizierung. Die Nutzbefehle 112, 114, 116 beinhalten sicherheitsrelevante Anweisungen, zur Verschlüsselung oder zur Verwaltung von vertraulichen Daten. Um eine sichere Ausführung der Nutzbefehle 110, 112, 114, 116 zu gewährleisten, sind zwischen den Nutzbefehlen 110, 112, 114, 116 Überprüfungsbefehle 120, 122, 124 angeordnet. Nach einer Ausführung der Nutzbefehle 110 wird der erste Überprüfungsbefehl 120 ausgeführt. Anschließend werden die Nutzbefehle 112 ausgeführt und daran anschließend der zweite Überprüfungsbefehl 122. Entsprechend werden nachfolgend die Nutzbefehle 114, der dritte Überprüfungsbefehl 124 und die Nutzbefehle 116 ausgeführt.

Die Sequenz 100 von Programm-Befehlen wird in einer Einrichtung zum Ausführen der Programmbefehle ausgeführt. Die Einrichtung zum Ausführen der Programmbefehle ist ausgebildet, um ansprechend auf die Überprüfungsbefehle 120, 122, 124 Überprüfungswerte 130, 132, 134 zu erzeugen. Bei Ausführung des ersten Überprüfungsbefehls 120 wird ein erster Überprüfungswert 130 erzeugt. Demgemäß wird bei Ausführung des Überprüfungsbefehls 122 ein zweiter Überprüfungswert 132.und bei Ausführung des dritten Überprüfungsbefehls 124 ein dritter Überprüfungswert 134 erzeugt. Die Erzeugung der Überprüfungswerte 130, 132, 134 erfolgt gemäß einer Erstellungsvorschrift.

Gemäß der vorliegenden Erfindung werden die Überprüfungswerte 130, 132, 134 nebenläufig zu der Programmausführung mit separat bereitgestellten Kontrollwerten (nicht gezeigt) verglichen. Bei einer Nichtübereinstimmung eines Überprüfungswertes 130, 132, 134 mit einem Kontrollwert wird ein Hinweis (nicht gezeigt) auf ein nicht sicheres Ausführen des Programms geliefert.

Beaufschlagt ein Angreifer eine Spannungsversorgung (nicht gezeigt) der Einrichtung zum Ausführen der Programmbefehle mit einem Störimpuls 140, so kann ein für den Programmablauf verantwortlicher Befehlszähler verändert werden. In diesem Ausführungsbeispiel tritt der Störimpuls 140 während einer Anweisung der Nutzbefehle 110 auf, die eine Anwenderauthentifizierung durchführt, die von einem Anwender eine Eingabe einer Geheimzahl fordert. Der Störimpuls 140 hat in diesem Ausführungsbeispiel einen Sprung 142 in der Sequenz von Programm-Befehlen, hervorgerufen durch eine Veränderung des Befehlszählers, ausgelöst. Als Folge davon zeigt der Befehlszähler nun auf die Nutzbefehle 114. Dem Angreifer ist es also gelungen den Authentifizierungsprozeß zu überspringen und über einen Nebeneintritt in einen Abschnitt des Programms zu gelangen, der einen Zugriff auf sicherheitskritische Daten ermöglicht.

Aus Fig. 1 ist zu erkennen, daß die sicherheitsrelevanten Nutzbefehle 112, 114, 116 häufiger von Überprüfungsbefehlen 122, 124 unterbrochen werden als nicht sicherheitsrelevante Nutzbefehle 110, die für eine Programminitialisierung erforderlich sind. Die häufige Anordnung von Überprüfungsbefehlen 122, 124 zwischen sicherheitsrelevanten Nutzbefehlen 112, 114, 116 gewährleistet, daß nach einem durch einen Störimpuls 140 erfolgten Nebeneintritt in die sicherheitsrelevanten Nutzbefehlen 112, 114, 116, bereits nach der Ausführung einiger weniger sicherheitsrelevanter Anweisungen ein Überprüfungsbefehl 122, 124 ausgeführt wird und der Nebeneintritt somit erkannt wird. Die Überprüfungsbefehle 120, 122, 124 sind bevorzugterweise so in die Nutzbefehle 110, 112, 114, 116 eingeflochten, daß ein Angreifer nach der Störung des Programmablaufes durch den Störimpuls 140 nicht in der Lage ist, sicherheitsrelevante Informationen auszulesen oder gar den weiteren Programmablauf zu steuern.

Durch die Veränderung 142 des Befehlszählers, werden der erste Überprüfungsbefehl 120 und der zweite Überprüfungsbefehl 122 übersprungen. Anstatt des ersten Überprüfungswertes 130 wird nach dem Sprung 142 in der Sequenz der Programm-Befehle der dritte Überprüfungswert 134 erzeugt. Da die Überprüfungswerte 130, 132, 134 gemäß der vorliegenden Erfindung mit Kontrollwerten verglichen werden, wird die, von dem Störimpuls 140 hervorgerufene Änderung 142 des Befehlszählers erkannt, sobald der Überprüfungsbefehl 124 ausgeführt wird und demzufolge anstatt des erwarteten ersten Überprüfungswertes 130 der dritte Überprüfungswert 134 erzeugt und mit dem separat erzeugten Kontrollwert verglichen wird.

Sind die Überprüfungswerte 130, 132, 134 bei der Erstellung der Sequenz 100 von Programm-Befehlen bereits bekannt, so können sie fest in den Überprüfungsbefehlen 120, 122, 124 eingefügt sein. Der erste Überprüfungsbefehl 120 enthält dann die Anweisung "Ausgabe: Wert 1", der zweite Überprüfungsbefehl 122 enthält die Anweisung "Ausgabe: Wert 2" und der dritte Überprüfungsbefehl 124 enthält die Anweisung "Ausgabe: Wert 3". Alternativ können die Überprüfungswerte 130, 132, 134 auch in einer Tabelle gespeichert sein, und die Überprüfungsbefehle 120, 122, 124 enthalten jeweils die Anweisung, einen entsprechenden Überprüfungswert aus der Tabelle auszulesen und auszugeben. Eine größere Flexibilität wird.erreicht, indem die Überprüfungswerte 130, 132, 134 erst während der Ausführung der Sequenz 100 von Programm-Befehlen erzeugt werden. In diesem Fall verzweigen die Überprüfungsbefehle 120, 122, 124 auf eine Unterroutine, die die Überprüfungswerte 130, 132, 134 gemäß der Erstellungsvorschrift erstellt und ausgibt. Bei erhöhten Sicherheitsanforderungen weist die Unterroutine gemäß der Erstellungsvorschrift einen Pseudo-Zufallsgenerator auf. Ausgehend von einem Initialisierungswert werden nachfolgende Überprüfungswerte als Pseudo-Zufallszahlensequenz erzeugt.

Eine große Anzahl unterschiedlicher Überprüfungswerte 130, 132, 134 erhöht den Schutz gegenüber einem Sprung 142 in der Sequenz der Programm-Befehle, da nur eine geringe Wahrscheinlichkeit besteht, daß der nach dem Sprung 142 gelieferte Überprüfungswert 134 mit dem erwarteten Überprüfungswert 130 übereinstimmt.

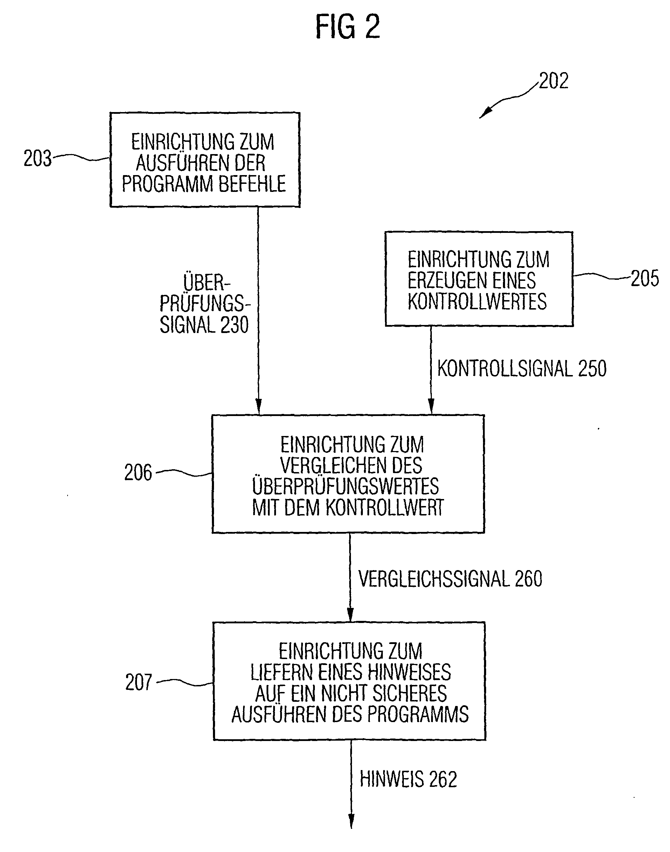

Fig. 2 zeigt ein Blockschaltbild einer Vorrichtung 202 zur sicheren Ausführung eines Programms. Die Vorrichtung 202 zur sicheren Ausführung eines Programms weist eine Einrichtung zum Ausführen der Programmbefehle 203, eine Einrichtung zum Erzeugen eines Kontrollwertes 205, eine Einrichtung zum Vergleichen des Überprüfungswertes mit dem Kontrollwert 206 und eine Einrichtung zum Liefern eines Hinweises auf ein nicht sicheres Ausführen des Programms 207 auf. Die Einrichtung 206 zum Vergleichen des Überprüfungswertes mit dem Kontrollwert ist mit der Einrichtung 203 zum Ausführen der Programmbefehle über ein Überprüfungssignal 230 und mit der Einrichtung 205 zum Erzeugen eines Kontrollwertes über ein Kontrollwertsignal 250 verbunden.

Die Einrichtung 203 zum Ausführen der Programmbefehle stellt über das Überprüfungssignal 230 einen Überprüfungswert und die Einrichtung 205 zum Erzeugen eines Kontrollwertes stellt über das Kontrollwertsignal 250 einen Kontrollwert an die Einrichtung 206 zum Vergleichen des Überprüfungswertes mit dem Kontrollwert bereit. Die Einrichtung 206 zum Vergleichen des Überprüfungswertes mit dem Kontrollwert ist ausgebildet, um den Überprüfungswert mit dem Kontrollwert zu vergleichen. Die Einrichtung 206 zum Vergleichen des Überprüfungswertes mit dem Kontrollwert ist mit der Einrichtung 207 zum Liefern eines Hinweises auf ein nicht sicheres Ausführen des Programms über ein Vergleichssignal 260 verbunden. Ansprechend auf das Vergleichssignal 260, das Informationen über den in der Einrichtung 206 zum Vergleichen des Überprüfungswertes mit dem Kontrollwert durchgeführten Vergleichs enthält, stellt die Einrichtung 207 zum Liefern eines Hinweises auf ein nicht sicheres Ausführen des Programms einen Hinweis 262 bereit.

Die Einrichtung 203 zum Ausführen der Programmbefehle führt eine Sequenz von Programm-Befehlen aus, die wie in Fig. 1 gezeigt, sowohl Nutzbefehle als auch Überprüfungsbefehle aufweist. Beim Ausführen eines Überprüfungsbefehles stellt die Einrichtung 203 zum Ausführen der Programmbefehle einen Überprüfungswert über das Überprüfungssignal 230 bereit. Der Überprüfungswert wird gemäß einer Erstellungsvorschrift erzeugt. Die Erstellungsvorschrift ist in der Einrichtung 205 zum Erzeugen eines Kontrollwertes bekannt.

Die Einrichtung 205 zum Erzeugen eines Kontrollwertes ist mit der Einrichtung 203 zum Ausführen der Programmbefehle oder der Einrichtung 206 zum Vergleichen eines Überprüfungswertes mit dem Kontrollwert auf eine Weise (nicht gezeigt) gekoppelt, daß sie ansprechend auf die Bereitstellung des Überprüfungswertes gemäß der Erstellungsvorschrift einen Kontrollwert erzeugt. Die Koppelung kann durch ein zusätzliches Signal oder durch eine Verbindung mit dem Überprüfungswert 230 erfolgen. Ausgehend von einem gemeinsamen Initialisierungswert nach einer Initialisierung der Vorrichtung 202 zur sicheren Ausführung eines Programms erzeugt die Einrichtung 203 zum Ausführen der Programmbefehle, ansprechend auf die Überprüfungsbefehle aufeinanderfolgende Überprüfungswerte 230 und die Einrichtung 205 zum Erzeugen eines Kontrollwertes, ansprechend auf die Überprüfungswerte 230, Kontrollwerte gemäß der gleichen Erstellungsvorschrift.

Bei einem ungestörten Programmablauf in der Einrichtung 203 zum Ausführen der Programmbefehle stimmt jeder erzeugte Überprüfungswert mit einem entsprechenden, nebenläufig erzeugten Kontrollwert überein. Wird jedoch, wie in Fig. 1 beschrieben, beim Ausführen der Sequenz von Programm-Befehlen ein einzelner Überprüfungsbefehl oder mehrere Überprüfungsbefehle übersprungen, so stimmt ein nachfolgend erzeugter Überprüfungswert nicht mit dem nebenläufig erzeugten Kontrollwert überein. In diesem Fehlerfall, wird der Einrichtung 207 zum Liefern eines Hinweises auf ein nicht sicheres Ausführen des Programms, die Nichtübereinstimmung des Überprüfungswertes mit dem Kontrollwert von der Einrichtung 206 zum Vergleichen des Überprüfungswertes mit dem Kontrollwert über das Vergleichssignal 260 mitgeteilt. In diesem Fall liefert die Einrichtung 207 zum Liefern eines Hinweises auf ein nicht sicheres Ausführen des Programms einen Fehlerhinweis 262.

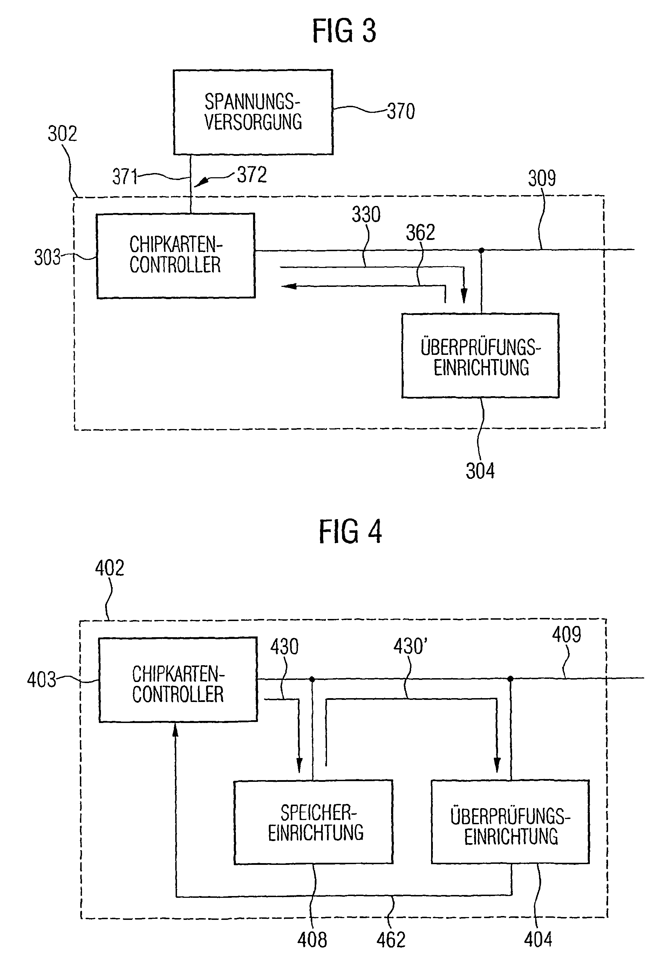

Fig. 3 zeigt ein weiteres bevorzugtes Ausführungsbeispiel einer Vorrichtung 302 zur sicheren Ausführung eines Programms. Die Vorrichtung 302 zur sicheren Ausführung eines Programms weist eine Einrichtung zum Ausführen der Programmbefehle in Form eines Chipkartencontrollers 303 und eine Überprüfungseinrichtung 304 auf, die als Peripheriegerät ausgebildet und mit dem Chipkartencontroller 303 über einen Chipkarten-Bus 309 verbunden. Die Überprüfungseinrichtung 304 weist die in Fig. 2 gezeigten Einrichtungen, eine Einrichtung zum Erzeugen eines Kontrollwertes, eine Einrichtung zum Vergleichen des Überprüfungswertes mit dem Kontrollwert und eine Einrichtung zum Liefern eines Hinweises auf ein nicht sicheres Ausführen des Programms (die letztgenannten Einrichtungen sind in Fig. 3 nicht gezeigt) auf.

Der Chipkartencontroller 303 kann über den Bus 309 mit weiteren Peripheriegeräten (nicht gezeigt) verbunden sein. Der Chipkartencontroller 303 führt ein Programm aus, das entsprechend zu Fig. 1, Nutzbefehle sowie Überprüfungsbefehle aufweist. Bei Ausführung eines Überprüfungsbefehls erzeugt der Chipkartencontroller 303 gemäß einer Erstellungsvorschrift einen Überprüfungswert 330. Der Chipkartencontroller 303 ist ausgebildet, um den erzeugten Überprüfungswert 330 über den Bus 309, in die Überprüfungseinrichtung 304 zu schreiben. Ansprechend auf den Überprüfungswert 330 erzeugt die Überprüfungseinrichtung, gemäß der Erstellungsvorschrift einen dem Überprüfungswert 330 entsprechenden Kontrollwert. Alternativ kann der entsprechende Kontrollwert bereits ansprechend auf einen vorangegangenen Überprüfungswert erzeugt worden sein und bis zum Eintreffen des folgenden Überprüfungswertes 330 gespeichert worden sein. Dies hat eine Zeitersparnis zur Folge, da der entsprechende Kontrollwert beim Eintreffen des Überprüfungswertes 330 bereits vorliegt. Nachfolgend wird der Überprüfungswert 330 mit dem Kontrollwert verglichen. Bei Nichtübereinstimmung des Überprüfungswertes 330 mit dem in der Überprüfungseinrichtung erzeugten Kontrollwert wird ein Fehlerhinweis 362 erzeugt, der dem Chipkartencontroller 303 über den Bus 309 übermittelt wird. Der Fehlerhinweis 362 ist in diesem Ausführungsbeispiel eine Anweisung, die den Chipkartencontroller in einen sicheren Zustand, einem sogenannten "Halt"-Zustand, versetzt.

Anhand von Fig. 3 wird außerdem ein möglicher invasiver Angriff auf den Chipkartencontroller dargestellt, der eine Störung des Programmablaufes, wie in Fig. 1 gezeigt, zur Folge hat. Der Chipkartencontroller 303 ist mit einer Spannungsversorgung 370 verbunden. Die Spannungsversorgung 370 versorgt den Chipkartencontroller über eine Leitung 371 mit einer Betriebsspannung, die innerhalb eines spezifizierten Spannungsbereiches liegt. Beaufschlagt ein Angreifer die Leitung 371 mit einem Störimpuls 372, so wird kurzzeitig der spezifizierte Betriebsspannungsbereich verlassen. Als Folge davpn, kann der Programmablauf, wie in Fig. 1 beschrieben, gestört werden und der Angreifer Zugriff auf geschützte Programmabschnitte erhalten. Erfindungsgemäß wird ein durch die Störung hervorgerufener Sprung im Programmablauf erkannt, da ein nach dem Angriff übermittelter Überprüfungswert 330 nicht mit dem entsprechend erzeugten Kontrollwert übereinstimmt und der Chipkartencontroller daraufhin von der Überprüfungseinrichtung 304 in einen "Halt"-Zustand versetzt wird. In diesem Zustand ist eine weitere Ausführung des Programms durch den Angreifer nicht möglich.

Bevorzugterweise ist die Überprüfungseinrichtung 304 so implementiert, dass sie von einem Angriff auf die Vorrichtung zur sicheren Ausführung eines Programms nicht beeinflusst wird, oder sie ist so ausgebildet, dass der Kontrollwert nach einer Störung auf einen sicheren Wert gesetzt wird, der sich von einem möglichen Überprüfungswert unterscheidet.

Fig. 4 zeigt ein weiteres bevorzugtes Ausführungsbeispiel einer Vorrichtung 402 zur sicheren Ausführung eines Programms. Entsprechend zu Fig. 3 weist die Vorrichtung 402 zur sicheren Ausführung eines Programms einen Chipkartencontroller 403 und eine Überprüfungseinrichtung 404 auf. Zusätzlich ist eine Speichereinrichtung 408 gezeigt, die über einen Bus 409 mit dem Chipkartencontroller 403 und der Überprüfungseinrichtung 404 verbunden ist. In diesem Ausführungsbeispiel ist der Chipkartencontroller 403 ausgebildet, um beim Ausführen eines Überprüfungsbefehles einen Überprüfungswert 430 in die Speichereinrichtung 408 zu schreiben. Entsprechend dazu ist die Überprüfungseinrichtung 404 ausgebildet, um einen Überprüfungswert 430', der dem Überprüfungswert 430 entspricht, aus der Speichereinrichtung 408 auszulesen. Da die Überprüfungseinrichtung 404 über den Bus 409 mit dem Chipkartencontroller 403 verbunden ist, erkennt die Überprüfungseinrichtung 404 einen Schreibvorgang, bei dem ein neuer Überprüfungswert 430 in die Speichereinrichtung geschrieben wird. Die Überprüfungseinrichtung 404 ist wiederum ausgebildet, um einen dem Überprüfungswert 430' entsprechenden Kontrollwert, gemäß der Erstellungsvorschrift zu erstellen, und den Kontrollwert mit dem Überprüfungswert 430' zu überprüfen. Bei einer Nichtübereinstimmung des Kontrollwertes mit dem Überprüfungswert 430', wird von der Überprüfungseinrichtung 404 wiederum ein Fehlerhinweis bereitgestellt, der in diesem Ausführungsbeispiel über ein zusätzliches Fehlersignal 462 dem Chipkartencontroller 403 mitgeteilt wird. Der Chipkartencontroller 403 ist ausgebildet, um sich ansprechend auf das Fehlersignal 462 in einen sicheren Zustand zu versetzen.

In diesem Ausführungsbeispiel unterscheiden sich aufeinanderfolgend Überprüfungswerte und werden in eine, der Überprüfungseinrichtung bekannten, Speicherstelle der Speichereinrichtung 408 geschrieben. Alternativ können aufeinanderfolgende Überprüfungswerte auch an unterschiedliche Speicherstellen der Speichereinrichtung 408 geschrieben werden. Die Information über die Speicherstelle, in die der Überprüfungswert 430 geschrieben wird bzw. der Überprüfungswert 430' ausgelesen wird ist in diesem Fall ebenfalls in der Erstellungsvorschrift enthalten und sowohl dem Chipkartencontroller 403 als auch der Überprüfungseinrichtung 404 bekannt. In diesem Fall unterscheiden sich aufeinanderfolgende Überprüfungswerte bereits durch die jeweils unterschiedliche Speicherstelle in der Speichereinrichtung 408. Weisen aufeinanderfolgende Überprüfungswerte zusätzlich unterschiedliche Werte auf, so erhöht dies die Sicherheit. Im Gegensatz zu vorangegangenen Ausführungsbeispielen können aufeinanderfolgende Überprüfungswerte in diesem Ausführungsbeispiel aber auch den gleichen Wert aufweisen.

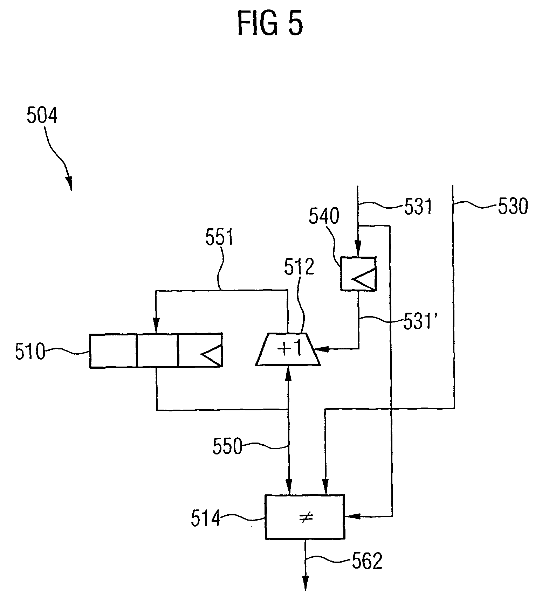

Fig. 5 zeigt ein Ausführungsbeispiel einer Überprüfungseinrichtung 504, die einer Überprüfungseinrichtung gemäß Fig. 3 entspricht. Die Überprüfungseinrichtung 504 weist ein Register 510, in Form eines 3-Bit-Registers, einen Aufwärtszähler 512 und eine Vergleichseinrichtung 514 auf. Die Vergleichseinrichtung 514 ist als Hardware-Komparator ausgeführt. Die Überprüfungseinrichtung 504 ist über einen Bus mit einem Chipkartencontroller (nicht gezeigt) verbunden. Von den Bussignalen ist ein Datensignal 530 und ein Kontrollsignal 531 gezeigt. Das Datensignal 530 ist mit der Vergleichseinrichtung 514 verbunden und stellt der Vergleichseinrichtung 514 einen von dem Chipkartencontroller erzeugten Überprüfungswert bereit. Ein Schreibvorgang eines Überprüfungswertes von dem Chipkartencontroller zu der Überprüfungseinrichtung 504 wird von dem Kontrollsignal 531 angezeigt. Das Kontrollsignal 531 ist sowohl mit der Vergleichseinrichtung 514 als auch mit einem Schieberegister 540 verbunden. Ansprechend auf ein aktives Kontrollsignal 531 vergleicht die Vergleichseinrichtung 514 den von dem Datensignal 530 bereitgestellten Überprüfungswert mit einem in dem Register 510 gespeicherten Kontrollwert 550. Der Kontrollwert 550 wird zusätzlich dem Vorwärtszähler 512 zugeführt. Ansprechend auf ein durch das Schieberegister 540 verzögertes Kontrollsignal 531' erhöht der Aufwärtszähler den Kontrollwert 550 um 1 und schreibt den neu erzeugten Kontrollwert 551 in das Register 510. In diesem Ausführungsbeispiel besagt die Erstellungsvorschrift, daß ein nachfolgender Kontrollwert 551 aus einem vorangegangenen Kontrollwert 550 erzeugt wird, indem der vorangegangene Kontrollwert 550 um 1 erhöht wird. Bei einer Initialisierung der Überprüfungseinrichtung wird das Register 510 auf einen definierten Wert gesetzt. In diesem Ausführungsbeispiel wird das Register 510 bei der Initialisierung auf den Wert 0 gesetzt. Ansprechend auf das Kontrollsignal 531, das das Vorhandensein eines gültigen Überprüfungswertes auf dem Datensignal 530 anzeigt, wird der Überprüfungswert mit dem Kontrollwert 550 in der Vergleichseinrichtung 514 verglichen. Ausgehend von dem durchgeführten Vergleich wird ein Hinweissignal 562 bereitgestellt. Über das Hinweissignal 562 wird bei Nichtübereinstimmung des Überprüfungswertes mit dem Kontrollwert ein Alarm ausgelöst.

Gemäß einem weiteren Ausführungsbeispiel beinhaltet eine Erstellungsvorschrift eine Nutzung eines Pseudo-Zufallszahlengenerators. Ein solcher Pseudo-Zufallszahlengenerator ist in einer Überprüfungseinrichtung in Form eines linearen Rückkopplungsregisters ausgebildet. Alternativ kann auch eine andere kryptographische Methode genutzt werden, die eine erhöhte Sicherheit bietet. Die Nutzung eines Pseudo-Zufallszahlengenerators erhöht die Sicherheit, wenn eine sehr hohe Zahl von Überprüfungswerten benötigt wird.

Alternativ kann die Überprüfungseinrichtung als Krypto-Coprozessor ausgeführt sein.

Obwohl oben bevorzugte Ausführungsbeispiele der vorliegenden Erfindung näher erläutert wurden, ist offensichtlich, daß die vorliegende Erfindung nicht auf diese Ausführungsbeispiele beschränkt ist. Insbesondere findet die vorliegende Erfindung auch Anwendung auf andere Datenverarbeitungssysteme, auf denen ein Programm ausgeführt wird, dessen sichere Ausführung gewährleistet sein soll. Der erfindungsgemäße Ansatz kann auch vorteilhaft für nicht sicherheitsrelevante Programme eingesetzt werden, da er nicht nur Schutz gegenüber Angriffen, die darauf abzielen, die Programmausführung zu stören, sondern auch Schutz gegenüber Störungen, hervorgerufen durch Umwelteinflüsse oder systembedingte Fehlfunktionen bietet.

Abhängig von den Gegebenheiten kann das erfindungsgemäße Verfahren zur sicheren Ausführung eines Programms in Hardware oder in Software implementiert werden. Die Implementation kann auf einem digitalen Speichermedium, insbesondere einer Diskette oder CD mit elektronisch auslesbaren Steuersignalen erfolgen, die so mit einem programmierbaren Computersystem zusammenwirken können, daß das entsprechende Verfahren ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

### Bezugszeichenliste

- 100: Sequenz von Programmbefehlen
- 110, 112, 114, 116: Nutzbefehle
- 120, 122, 124: Überprüfungsbefehle
- 130, 132, 134: Überprüfungswert
- 140: Störimpuls
- 142: Sprung in der Programmsequenz

- 202: Vorrichtung zur sicheren Ausführung eines Programms
- 203: Einrichtung zum Ausführen der Programmbefehle
- 205: Einrichtung zum Erzeugen eines Kontrollwertes
- 206: Einrichtung zum Vergleichen des Überprüfungswertes mit dem Kontrollwert
- 207: Einrichtung zum Liefern eines Hinweises auf ein nicht sicheres Ausführen des Programms
- 230: Überprüfungssignal
- 250: Kontrollsignal
- 260: Vergleichssignal
- 262: Fehlerhinweis

- 302: Vorrichtung zur sicheren Ausführung eines Programms
- 303: Chipkarten-Controller
- 304: Überprüfungseinrichtung
- 309: Bus
- 330: Überprüfungswert
- 362: Fehlerhinweis
- 370: Spannungsversorgung
- 371: Versorgungsleitung
- 372: Störangriff

- 402: Vorrichtung zur sicheren Ausführung eines Programms
- 403: Chipkarten-Controller
- 404: Überprüfungseinrichtung
- 408: Speichereinrichtung
- 409: Bus
- 430: Überprüfungswert
- 430': ausgelesener Überprüfungswert
- 462: Fehlerhinweis

- 504: Überprüfungseinrichtung
- 510: Register
- 512: Aufwärtszähler
- 514: Vergleichseinrichtung
- 530: Datensignal
- 531: Kontrollsignal
- 531': verzögertes Kontrollsignal
- 540: Schieberegister
- 550: Kontrollwert
- 551: nachfolgender Kontrollwert
- 562: Fehlerhinweissignal

## Patentansprüche

1. Vorrichtung (202; 302; 402) zur sicheren Ausführung eines Programms, das eine Sequenz (100) von Programm-Befehlen umfaßt, wobei die Programm-Befehle Nutzbefehle (110, 112, 114, 116) und Überprüfungsbefehle (120, 122, 124) umfassen, wobei die Überprüfungsbefehle zwischen den Nutzbefehlen angeordnet sind, so dass gemäß einem spezifizierten Ausführungspfades des Programms eine Reihenfolge der Ausführung der Überprüfungsbefehle festgelegt ist, mit folgenden Merkmalen:
einer Einrichtung (203; 303; 403) zum Ausführen der Sequenz von Programm-Befehlen, wobei die Einrichtung zum Ausführen ausgebildet ist, um beim Ausführen eines Überprüfungsbefehls einen gemäß einer Erstellungsvorschrift erzeugten Überprüfungswert (130, 132, 134; 230; 330; 430) bereitzustellen;
einer Einrichtung (205; 512) zum separaten Erzeugen eines Kontrollwertes (250; 550) nebenläufig zur Ausführung des Programms, wobei der Kontrollwert gemäß der Erstellungsvorschrift von einem vorangegangenen Kontrollwert abgeleitet ist;
einer Einrichtung (206; 514) zum Vergleichen des Überprüfungswertes mit dem Kontrollwert nebenläufig zur Ausführung des Programms; und
einer Einrichtung (207; 514) zum Liefern eines Hinweises (262; 562) auf eine Störung der Ausführung des spezifizierten Ausführungspfads des Programms, bei Nichtübereinstimmung des Überprüfungswertes und des Kontrollwertes,
wobei die Einrichtung (205; 512) zum separaten Erzeugen des Kontrollwertes (250; 550), die Einrichtung (206; 514) zum Vergleichen und die Einrichtung (207; 514) zum Liefern eines Hinweises (262; 562) in Hardware separat von der Einrichtung zum Ausführen der Sequenz von Programm-Befehlen ausgeführt sind,
wobei die Einrichtung zum separaten Erzeugen des Kontrollwertes ein Register (510), einen Vorwärtszähler (512) und ein Schieberegister (540) aufweist, wobei die Einrichtung (514) zum Vergleichen ausgelegt ist, um ansprechend auf ein aktives Kontrollsignal (531), das das Vorhandensein eines gültigen Überprüfungswerts anzeigt, den Überprüfungswert mit einem in dem Register (510) gespeicherten Kontrollwert zu vergleichen, wobei das Schieberegister (540) ausgelegt ist, um das Kontrollsignal zu verzögern, und wobei der Vorwärtszähler (512) ausgelegt ist, um ansprechend auf das durch das Schieberegister (540) verzögerte Kontrollsignal den Kontrollwert (550) in dem Register (510) zu erhöhen.

2. Vorrichtung zur sicheren Ausführung eines Programms gemäß Anspruch 1, wobei die Einrichtung (303; 403) zum Ausführen der Programmbefehle ausgebildet ist, um ansprechend auf einen Hinweis (362; 462) auf ein nicht sicheres Ausführen des Programms einen Sicherheitszustand einzunehmen.

3. Vorrichtung zur sicheren Ausführung eines Programms gemäß einem der Ansprüche 1 oder 2, wobei die Einrichtung zum Ausführen der Programmbefehle ein Chipkarten-Controller (303; 403) ist, der mit einer Überprüfungseinrichtung (304; 404) verbunden ist, die eine Einrichtung zum Erzeugen eines Kontrollwertes, einer Einrichtung zum Vergleichen des Überprüfungswertes mit dem Kontrollwert und eine Einrichtung zum Liefern eines Hinweises auf ein nicht sicheres Ausführen des Programms aufweist.

4. Vorrichtung zur sicheren Ausführung eines Programms gemäß Anspruch 3, wobei die Überprüfungseinrichtung ein Krypto-Coprozessor ist.

5. Vorrichtung zur sicheren Ausführung eines Programms gemäß einem der Ansprüche 1 bis 4, wobei die Vorrichtung (402) zur sicheren Ausführung eines Programms einen Bus (409) und eine Speichereinrichtung (408) aufweist und wobei die Einrichtung (403) zum Ausführen der Programmbefehle, die Einrichtung zum Vergleichen des Überprüfungswertes mit dem Kontrollwert und die Speichereinrichtung mit dem Bus gekoppelt sind; und
wobei die Einrichtung zum Ausführen der Programmbefehle ausgebildet ist, um einen Überprüfungswert (430) gemäß einer Erstellungsvorschrift in der Speichereinrichtung bereitzustellen und wobei die Einrichtung zum Vergleichen ausgebildet ist, um einen Überprüfungswert (430') gemäß der Erstellungsvorschrift aus der Speichereinrichtung auszulesen.

6. Vorrichtung zur sicheren Ausführung eines Programms gemäß einem der Ansprüche 1 bis 5, wobei die Einrichtung zum Vergleichen (514) als Hardware-Komparator ausgeführt ist.

## Claims

1. Apparatus (202; 302; 402) for securely executing a program which comprises a sequence (100) of program instructions, the program instructions comprising useful instructions (110, 112, 114, 116) and checking instructions (120, 122, 124), the checking instructions being arranged between the useful instructions, with the result that an order in which the checking instructions are executed is stipulated according to a specified execution path of the program, having the following features:
a device (203; 303; 403) for executing the sequence of program instructions, the executing device being configured to provide a checking value (130, 132, 134; 230; 330; 430) generated according to a creation rule during execution of a checking instruction;
a device (205; 512) for separately generating a control value (250; 550) in a concurrent manner with the execution of the program, the control value being derived from a previous control value according to the creation rule;
a device (206; 514) for comparing the checking value with the control value in a concurrent manner with the execution of the program; and
a device (207; 514) for providing an indication (262; 562) of a disturbance in the execution of the specified execution path of the program if the checking value and the control value do not match,
the device (205; 512) for separately generating the control value (250; 550), the device (206; 514) for comparing and the device (207; 514) for providing an indication (262; 562) being implemented in hardware separately from the device for executing the sequence of program instructions,
the device for separately generating the control value comprising a register (510), an up-counter (512) and a shift register (540), the device (514) for comparing being designed to compare the checking value with a control value stored in the register (510) in response to an active control signal (531) which indicates the presence of a valid checking value, the shift register (540) being designed to delay the control signal, and the up-counter (512) being designed to increase the control value (550) in the register (510) in response to the control signal delayed by the shift register (540).

2. Apparatus for securely executing a program according to Claim 1, the device (303; 403) for executing the program instructions being configured to assume a security state in response to an indication (362; 462) of non-secure execution of the program.

3. Apparatus for securely executing a program according to either of Claims 1 and 2, the device for executing the program instructions being a chip card controlled (303; 403) which is connected to a checking device (304; 404) which has a device for generating a control value, a device for comparing the checking value with the control value and a device for providing an indication of non-secure execution of the program.

4. Apparatus for securely executing a program according to Claim 3, the checking device being a crypto-coprocessor.

5. Apparatus for securely executing a program according to one of Claims 1 to 4, the apparatus (402) for securely executing a program comprising a bus (409) and a storage device (408), and the device (403) for executing the program instructions, the device for comparing the checking value with the control value and the storage device being coupled to the bus; and
the device for executing the program instructions being configured to provide a checking value (430) according to a creation rule in the storage device, and the device for comparing being configured to read out a checking value (430') according to the creation rule from the storage device.

6. Apparatus for securely executing a program according to one of Claims 1 to 5, the comparing device (514) being in the form of a hardware comparator.

## Revendications

1. Dispositif (202; 302; 402) d'exécution, d'une façon sécurisée, d'un programme qui comprend une séquence (100) d'instructions de programme, les instructions de programme comprenant des instructions (110, 112, 114, 116) utiles et des instructions (120, 122, 124) de vérification, les instructions de vérification étant disposées entre les instructions utiles de manière à fixer, suivant un trajet d'exécution spécifié du programme, un ordre d'exécution des instructions de vérification, comprenant les caractéristiques suivantes :
un dispositif (203; 303; 403) d'exécution de la séquence d'instructions de programme, le dispositif d'exécution étant constitué pour, lors de l'exécution des instructions de vérification, mettre à disposition une valeur (130, 132, 134; 230; 330; 430) de vérification produite suivant une prescription d'établissement ;
un dispositif (205; 512) de production distincte d'une valeur (250; 550) de contrôle auxiliairement à l'exécution du programme, la valeur de contrôle étant déduite d'une valeur de contrôle précédente suivant la prescription d'établissement ;
un dispositif (206; 514) de comparaison de la valeur de vérification à la valeur de contrôle, auxiliairement à l'exécution du programme, et
un dispositif (207; 514) de fourniture d'une indication (262; 562) d'une perturbation de l'exécution du trajet de l'exécution spécifiée du programme, si la valeur de vérification et la valeur de contrôle ne coïncident pas ;
dans lequel le dispositif (205; 512) de production distincte de la valeur (250; 550) de contrôle, le dispositif (206; 514) de comparaison et le dispositif (207; 514) de fourniture d'une indication (262; 562) sont réalisés en matériel distinctement du dispositif d'exécution de la séquence d'instructions du programme,
dans lequel le dispositif de production de manière distincte de la valeur de contrôle a un registre (510), un compteur (512) progressif et un registre (540) à décalage, le dispositif (514) étant conçu pour la comparaison afin de comparer, en réaction à un signal (531) actif de contrôle qui indique la présence d'une valeur de vérification valable, la valeur de vérification à une valeur de contrôle mémorisée dans le registre (510), le registre (540) à décalage étant conçu pour retarder le signal de contrôle, et le compteur (512) progressif étant conçu pour augmenter, en réaction au signal de contrôle retardé par le registre (540) à décalage, la valeur (550) de contrôle dans le registre (510).

2. Dispositif d'exécution, de façon sécurisée, d'un programme suivant la revendication 1, dans lequel le dispositif (303; 403) d'exécution des instructions de programme, est constitué pour, en réaction à une indication (362; 462) d'exécution non sécurisée du programme, prendre un état de sécurisation.

3. Dispositif d'exécution, de façon sécurisée, d'un programme suivant l'une des revendications 1 ou 2, dans lequel le dispositif d'exécution des instructions de programme est une unité (303; 403) de commande à carte à puce, qui est relié à un dispositif (304; 404) de vérification, lequel a un dispositif de production d'une valeur de contrôle, un dispositif de comparaison de la valeur de vérification à la valeur de contrôle et un dispositif de fourniture d'une indication d'exécution du programme d'une façon non sécurisée.

4. Dispositif d'exécution, de façon sécurisée, d'un programme suivant la revendication 3, dans lequel un dispositif de vérification est un crypto-coprocesseur.

5. Dispositif d'exécution, de façon sécurisée, d'un programme suivant l'une des revendications 1 à 4, dans lequel le dispositif (402) d'exécution de façon sécurisée d'un programme, comprend un bus (409) et un dispositif (408) de mémorisation, dans lequel le dispositif (403) d'exécution des instructions de programme, le dispositif de comparaison de la valeur de vérification à la valeur de contrôle et le dispositif de mémorisation sont couplés au bus, et
dans lequel le dispositif d'exécution des instructions de programme est constitué pour mettre à disposition une valeur (430) de vérification suivant une prescription d'établissement dans le dispositif de mémorisation et dans lequel le dispositif de comparaison est constitué pour lire, dans le dispositif de mémorisation, une valeur (430') de vérification suivant la prescription d'établissement.

6. Dispositif d'exécution, de façon sécurisée, d'un programme suivant l'une des revendications 1 à 5, dans lequel le dispositif de comparaison (514) est réalisé sous la forme d'un comparateur matériel.
